# EUROPEAN PATENT SPECIFICATION

(11) **EP 1 947 548 B1**
(45) Date of publication and mention of the grant of the patent: **16.12.2009**
(21) Application number: 07023042.0
(22) Date of filing: 28.11.2007
(51) Int. Cl.: G06F 3/01, G06K 9/00, B60R 16/02

(54) **Actuation system for functions in a vehicle and vehicle**
Bediensystem zum Bedienen von Funktionen in einem Fahrzeug und Fahrzeug
Système de commande des fonctions dans un véhicule automobile et véhicule

(30) Priority: 27.12.2006 JP 2006353195
(43) Date of publication of application: 23.07.2008
(73) Proprietor: TAKATA CORPORATION, Minato-ku, Tokyo 106-8510 (JP)
(72) Inventor: Aoki, Hiroshi c/o Takata Corporation, Tokyo 106-8510 (JP); Mita, Hirofumi c/o Takata Corporation, Tokyo 106-8510 (JP); Yokoo, Masato c/o Takata Corporation, Tokyo 106-8510 (JP); Hakomori, Yuu c/o Takata Corporation, Tokyo 106-8510 (JP)
(74) Representative: Banzer, Hans-Jörg

(56) References cited:
- WO-A-2006/109476
- DE-A1- 10 349 568
- DE-A1-102004 038 965
- DE-A1-102006 037 156

## Description

The present invention relates to a vehicular actuation system which is installed in a vehicle and, more particularly, to a technology for developing a vehicular actuation system comprising an actuation device to be actuated by operation of an operation member by a vehicle occupant.

### Background of the Invention

Conventionally, JP-A-2005-254906 discloses a vehicular lighting device as an example of the actuation device to be actuated by operation of a vehicle occupant. To actuate various actuation devices such as the vehicular lighting device, the vehicle occupant may reach for and feel for an operation switch for the objective actuation device to operate the switch or may look around the operation switch for a certain period of time for operating the switch. Under the circumstances, there is a demand for technology of enabling the simplification of the operation for actuating the actuation device.

A vehicular actuation system according to the preamble of independent claim 1 is known from WO 2006/109476 A1, DE 10 2004 038 965 A1, and DE 103 49 568 A1.

Furthermore, a similar vehicular actuation system is also known from DE 10 2006 037 156 A1 which, however, only constitutes state of the art under Article 54 (3), (4) EPC.

### Disclosure of the Invention

### Problems to be solved by the Invention

The present invention is made in view of the aforementioned point. In a vehicular actuation system comprising an actuation device to be actuated by operation of an operation member by a vehicle occupant, it is an object of the present invention to provide a technology which is effective for enabling the simplification of the operation for actuating the actuation device.

### Means to solve the Problems

According to the invention, this object is achieved by a vehicular actuation system as defined in claim 1 or a vehicle as defined in claim 3. The dependent claim defines a preferred and advantageous embodiment of the invention.

For achieving the object, the present invention is configured. Though the present invention is typically adapted to a vehicular actuation system installed in an automobile, the present invention can be also adapted to a vehicular actuation system installed in a vehicle other than the automobile.

A vehicular actuation system of the present invention is a system installed in a vehicle which comprises at least an actuation device, detecting unit, and a control unit.

The actuation device is a device to be actuated when an operation member for the device is operated by a vehicle occupant. Typical examples of the actuation device include lights outside and inside of the vehicle, an air conditioner, door mirrors, a car navigation system, and an audio system. A palm or a back of a hand of the vehicle occupant means a part from a wrist to the end of a hand including fingers. The vehicle occupant widely includes not only an occupant seated in a driver seat for operating a steering wheel of the vehicle but also an occupant seated in a front passenger seat or the like.

The detecting unit has a function of detecting a three-dimensional image in an operational area of a predetermined range about the operation member. As the detecting unit, typically a 3-D type monocular C-MOS camera or a 3-D type pantoscopic stereo camera as a noncontact-type three-dimensional measuring device may be employed. In addition, a 3D scanner may also be employed. The installation place of the detecting unit may be suitably selected according to the intended operation member. Typically, the detecting unit may be placed in an area around an inner rearview mirror, a dashboard, a ceiling, or a pillar.

The control unit determines, based on the three-dimensional image detected by the detecting unit, whether or not the palm or back of hand of the vehicle occupant exists in the operational area of the operation member. When it is determined that the palm or back of hand of the vehicle occupant exists in the operational area, the control unit determines that the vehicle occupant is willing to actuate the actuation device corresponding to the operational area and controls to actuate the actuation device. The determination whether or not the palm or back of hand of the vehicle occupant exists may be conducted by judging whether or not the size of the detected part is equal to a palm or back of hand which is previously defined when a human body part is detected in the operational area or alternatively judging whether or not there is a detected object of which the size is equal to a palm or back of a hand in the operational area.

According to the aforementioned structure, the vehicular actuation system of the present invention has at least a first operation mode in which the operation member is directly operated by the hand of the vehicle occupant to actuate the actuation device and a second operation mode in which the actuation device is actuated by non-contact operation of the operation member, i.e. without contacting the operation member manually, according to the control of the control unit. Therefore, the vehicle occupant can select the first operation mode or the second operation mode for actuating the actuation device before and after driving and during stoppage of the vehicle and can select the second operation mode for actuating the actuation device during driving. Particular, in case that the vehicle occupant sitting in the normal position directly operates the operation member having a limited size during driving, a certain period of time is required to look around the operation member and/or the vehicle occupant may be out of the normal position so that there is a concern that the vehicle occupant's attention is diminished. However, if the vehicle occupant selects the second operation mode only requiring the movement of the palm or back of hand into the operational area around the operation member, the allowable range for the palm or back of hand for actuating the actuation device is increased, thereby allowing easy operation for actuating the actuation device and thus preventing the vehicle occupant's attention from being diminished.

By using three-dimensional images, information about the operational area of the operation member can be precisely detected. That is, in case of using three-dimensional images, it ensures high degree of precision in detection as compared to the case of using two-dimensional images because information can be extracted according to distances even when there is a small difference in color between the background and the vehicle occupant or a small difference in color between the skin and the clothes.

The detecting unit of the present invention may be composed of a single detecting unit for detecting three-dimensional images in one or more operational areas and may be composed of a plurality of detecting units. The plural operational areas may be areas separate from each other or respective sections of a single operational area. For example, when controls for at least two actuation devices are conducted by a single photographing device, the operation members of the actuation devices are positioned close to each other, a first section of the single operational area may be defined as the operational area relating to the actuation of one of the actuation devices and a second section of the single operational area may be defined as the operational area relating to the actuation of the other one of the actuation devices. That is, according to which section of the single operational area the palm or back of hand of the vehicle occupant exists in, it is specified which actuation device must be actuated.

The vehicular actuating system according to the present invention further comprises a voice input unit to which the vehicle occupant inputs, with his or her voice, information about an intended operation member which will be operated. The "information about an intended operation member" used here widely includes not only information indicating the intended operation member itself but also information directly or indirectly suggesting the intended operation member. With this structure, in the second operation mode, when the intended operation member is specified based on the information inputted to the voice input unit and when it is determined, based on the three-dimensional image detected by the detecting unit, that the palm or back of hand of the vehicle occupant exists in the operational area, the control unit conducts a control to actuate the actuation device under the condition where the operation member corresponding to the operational area where the palm or back of hand is detected is identical to the intended operation member which is previously specified.

According to the invention, information about the intended operation member which will be operated is inputted by a voice message and is announced beforehand. This specifies the actuation device intended by the vehicle occupant as the subject to be actuated, thereby preventing the malfunction of the actuation device.

In the vehicular actuation system according to another aspect of the present invention, in the second operation mode, the control unit determines a behavior of the palm or back of hand of the vehicle occupant when it is determined, based on the three-dimensional image detected by the detecting unit, that the palm or back of hand of the vehicle occupant exists in the operational area, and conducts a control to change the action of the actuation device according to the behavior of the palm or back of hand for actuating the actuation device. As for the behavior of the palm or back of hand of the vehicle occupant, the moving amount, moving speed, acceleration, or staying time of the palm or back of hand in the operational area may be employed.

According to this structure, the vehicle occupant can suitably select behavior of the hand corresponding to a desired action of the actuation device, thereby enabling fine control for the actuation device without directly operating the operation member manually.

A vehicle of the present invention comprises at least an engine/running system, an electrical system, a vehicle control device; and vehicular actuation system as mentioned above. The engine/running system is a system involving an engine and a running mechanism of the vehicle. The electrical system is a system involving electrical parts used in the vehicle. The vehicle control device is a device having a function of controlling the actuation of the engine/running system and the electrical system.

According to this structure, a vehicle can be provided in which a vehicular actuation system capable of actuating an actuation device without directly operating an operation member manually.

### [Effects of the Invention]

As described above, the present invention provides a vehicular actuation system with an actuation device to be actuated when an operation member for the actuation device is operated by a vehicle occupant, in which easy operation for actuating the actuation device is enabled by employing such a structure of detecting a three-dimensional image in an operational area of the operation member, determining, based on the detected three-dimensional image, whether or not a palm or back of hand of the vehicle occupant exists in the operational area, and actuating the actuation device when it is determined that the palm or back of hand of the vehicle occupant exists in the operational area.

### Brief Explanation of the drawings

Fig. 1 is an illustration showing a system configuration of a vehicular actuation system 100 according to an embodiment.
Fig. 2 is a side view of a coordinate system A (X, Y, Z) when a 3D camera 112 shown in Fig. 1 is put on a dashboard.
Fig. 3 is a rear view of the coordinate system A (X, Y, Z) shown in Fig. 2.
Fig. 4 is a side view of a coordinate system B (X', Y', Z') when the 3D camera 112 shown in Fig. 1 is put on the dashboard.
Fig. 5 is a rear view of the coordinate system B (X', Y', Z') shown in Fig. 4.
Fig. 6 is an illustration schematically showing an aspect of detecting existence of a palm or back of hand H of a vehicle occupant within an operational area C of a predetermined range about an operation member 180a.
Fig. 7 is a diagram showing a flow until an actuation device 180 is actuated based on detection of the palm or back of hand H of the vehicle occupant in the operational area C shown in Fig. 6.
Fig. 8 is an illustration schematically showing an aspect of detecting a behavior of the palm or back of hand H of the vehicle occupant in the predetermined operational area C including the operation member 180a of this embodiment.
Fig. 9 is a diagram showing a flow until the actuation device 180 is actuated based on the detection of the behavior of the palm or back of hand H of the vehicle occupant in the operational area C shown in Fig. 8.

### Best Modes for carrying out the Invention

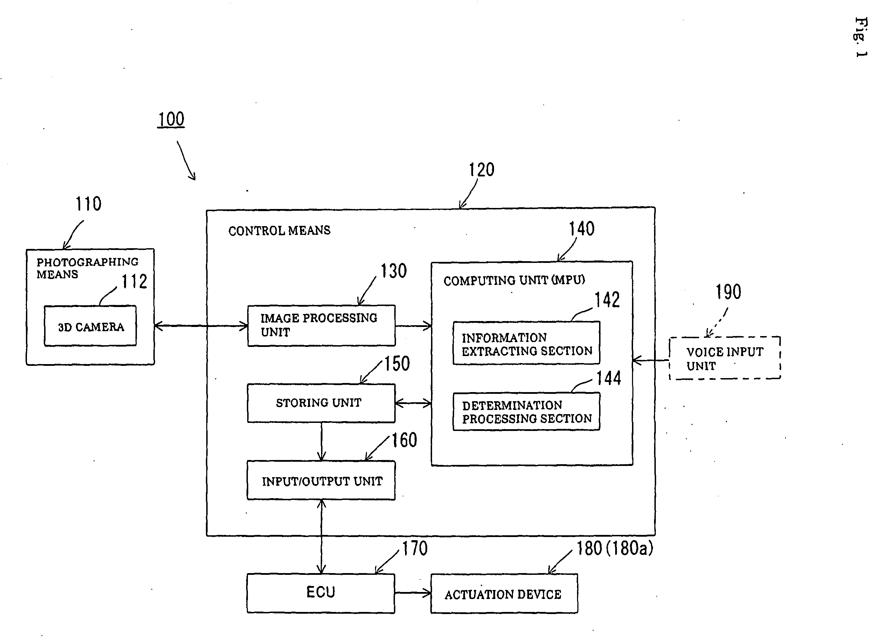

Hereinafter, embodiments of the present invention will be described with reference to drawings. First, a vehicular actuation system 100 as an embodiment of "vehicular actuation system" of the present invention will be described with reference to Fig. 1.

The system configuration of a vehicular actuation system 100 of this embodiment is shown in Fig. 1. As shown in Fig. 1, the vehicular actuation system 100 of this embodiment is installed in an automobile as the "vehicle" of the present invention and comprises at least a photographing means 110, a control means 120, an ECU 170, and an actuation device 180. The vehicle comprises, but not shown, an engine/running system involving an engine and a running mechanism of the vehicle (corresponding to "engine/running system" of the present invention), an electrical system involving electrical parts used in the vehicle (corresponding to "electrical system" of the present invention), and a vehicle control device (ECU 170) for conducting the actuation control of the engine/running system and the electrical system. In this case, the vehicle control device corresponds to "vehicle control device" of the present invention.

The photographing means 110 of this embodiment includes a 3D camera 112 as the photographing device and a data transfer circuit. The 3D camera 112 is a 3-D (three-dimensional) camera (sometimes called "monitor") of a C-MOS or CCD (charge-coupled device) type in which light sensors are arranged into an array (lattice) structure. The 3D camera 112 is typically disposed, for example, at a central portion in the lateral direction of a dashboard or an area around an inner rearview mirror in order to take an occupant in a driver seat and an occupant in a front passenger seat in the front. By this camera, three-dimensional images can be taken from a single view point. Thus, distances relative to the occupant in the driver seat and the occupant in the front passenger seat are measured a plurality of times to detect a three-dimensional surface profile, thereby periodically measuring a plurality of times the information about the occupant in the driver seat and the occupant in the front passenger seat. As the 3D camera 112, a 3-D type monocular C-MOS camera or a 3-D type pantoscopic stereo camera as a noncontact-type three-dimensional measuring device may be employed. Instead of the 3D camera 112, a 3D scanner capable of obtaining three-dimensional images may be employed.

Mounted on the vehicular actuation system 100 of this embodiment is a power source unit for supplying power from a vehicle buttery to the 3D camera 112, but not particularly shown. The 3D camera 112 is set to start its photographing operation when the ignition key is turned ON or when a seat sensor (not shown) installed in the driver seat detects an occupant sitting in the driver seat.

The control means 120 of this embodiment further comprises at least an image processing unit 130, a computing unit (MPU) 140, a storing unit 150, an input/output unit 160, and peripheral devices (not shown). The control means 120 has a function of detecting a three-dimensional image about a certain actuation area C (an actuation area in a predetermined range from an operation member 180a as will be described later) as will be described later from an image taken by the 3D camera 112 and also a function of controlling the actuation device 180 based on the thus detected information. The control means 120 together with the photographing means 110 compose "detecting unit" and "control unit" of the present invention.

The image processing unit 130 is a means for controlling the camera to obtain good quality images and for controlling the image processing for processing images taken by the 3D camera 112 to be used for analysis. Specifically, as for the control of the camera, the adjustment of the frame rate, the shutter speed, and the sensitivity, and the accuracy correction are conducted to control the dynamic range, the brightness, and the white balance. As for the control of the image processing, the spin compensation for image, the correction for distortion of the lens, the filtering operation, and the difference operation as image preprocessing operations are conducted and the configuration determination and the trucking as image recognition processing operations are conducted. The three-dimensional image of the vehicle occupants taken by the 3D camera 112 is represented by picture elements within an XYZ coordinate system. The "picture element" used here is sometimes called "pixel" which is a colored "point" as a unit composing a digital image, and may contain information about distance (depth), degree of transparency, and the like.

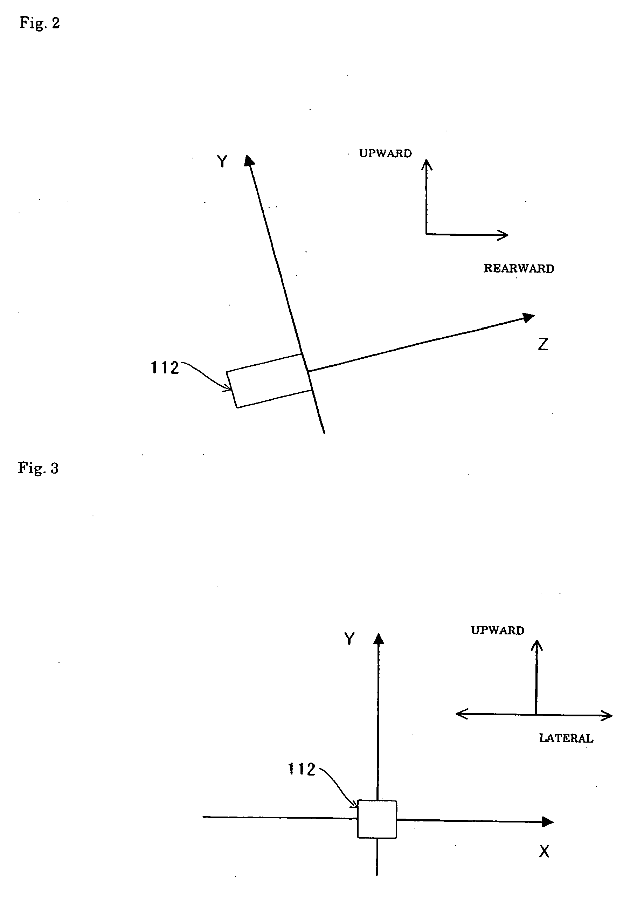

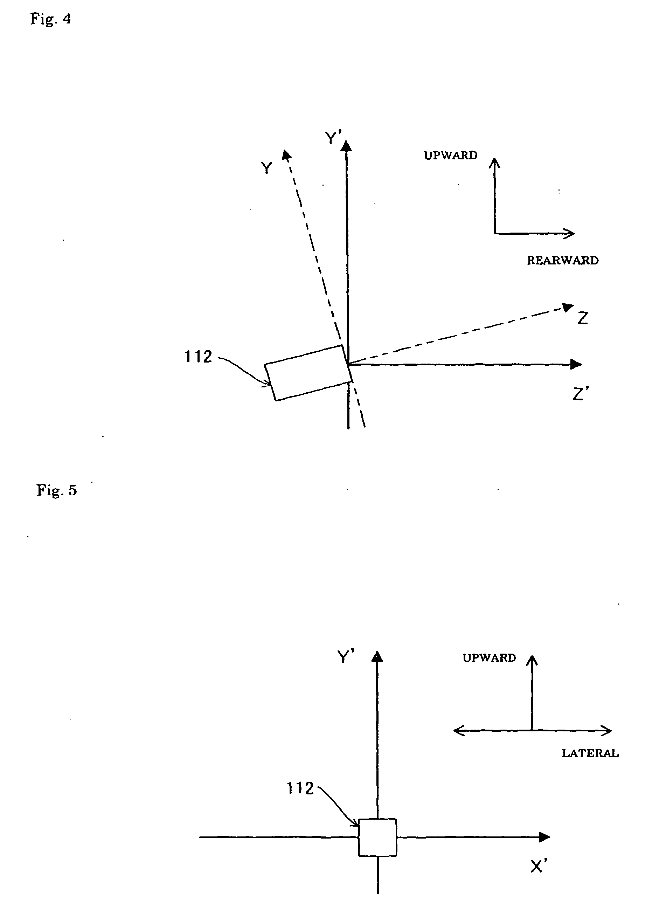

The three-dimensional image of the vehicle occupant is preferably converted from a coordinate system A (X, Y, Z) with their origin at the center of the 3D camera 112 into a coordinate system B (X', Y', Z') with their origin at the center of the vehicle body. Fig. 2 shows a side view of the coordinate system A (X, Y, Z) when the 3D camera 112 shown in Fig. 1 is placed on the dashboard and Fig. 3 shows a rear view of the coordinate system A (X, Y, Z) shown in Fig. 2. Fig. 4 shows a side view of the coordinate system B (X', Y', Z') when the 3D camera 112 shown in Fig. 1 is placed on the dashboard and Fig. 5 shows a rear view of the coordinate system B (X', Y', Z') shown in Fig. 4. In the coordinate system B with their origin at the center of the vehicle body, the X'-axis extends in parallel with the floor of the vehicle body and the lateral direction of the vehicle, the Y'-axis extends perpendicular to the floor of the vehicle body and in parallel with the vertical direction of the vehicle, and the Z'-axis extends in parallel with the floor of the vehicle and the anteroposterior direction of the vehicle. This conversion of the coordinate system facilitates the definition of an operational area C.

The computing unit 140 of this embodiment has a function of processing the information from the image processing unit 130 and includes an information extracting section 142 and a determination processing section 144. The information extracting section 142 has a function of extracting (sometimes referred to as "detecting") three-dimensional image of the predetermined operational area C from the information obtained by the image processing unit 130. The determination processing section 144 determines based on the three-dimensional image of the operational area C extracted by the image extracting section 142 whether or not a palm or a back of a hand of the vehicle occupant, that is, a part from a wrist to the end of a hand including fingers exists in the operational area C. The determination process is conducted by judging whether or not the size of the detected part is equal to a palm or back of hand which is previously defined when a human body is detected in the operational area C or alternatively judging whether or not there is a detected part of which the size is equal to a palm or back of a hand in the operational area C. When it is determined that the palm or back of hand of the vehicle occupant exists in the operational area C, a control signal for actuating the actuation device 180 is outputted.

The storing unit 150 of this embodiment is a means for storing (recording) data for correction, buffer frame memory for preprocessing, defined data for recognition computing, reference patterns, information about the operational area C previously set in the computing unit 140, and the computed results of the computing unit 140 as well as an operation control software.

The input/output unit 160 of this embodiment inputs information about the vehicle, information about traffic conditions around the vehicle, information about weather condition and about time zone as well as the determination results by the computing unit 140 to the ECU 170 for conducting controls of the entire vehicle and outputs recognition results. As the information about the vehicle, there are, for example, collision prediction information of the vehicle by a radar or camera, the state (open or closed) of a vehicle door, the wearing of the seat belt, the operation of brakes, the vehicle speed, and the steering angle.

The actuation device 180 of this embodiment is a device to be actuated by a control signal from the ECU 170. The actuation device 180 is provided with an operation member 180a to be manipulated by the vehicle occupant. By directly manipulating the operation member 180a, the actuation device 180 is actuated or the mode of the actuation device 180 is changed. The operation mode in this case is a mode in which the actuation device 180 is actuated by directly manipulating the operation member 180a and corresponds to the "first operation mode" of the present invention. Typical examples of the actuation device 180 include lights outside and inside of the vehicle, an air conditioner, door mirrors, a car navigation system, and an audio system. Typical examples of the operation member 180a of the actuation device 180 include switches and buttons of various types such as slide type, push type, and rotary type. The actuation device 180 used here corresponds to the "actuation device" of the present invention and the operation member 180a of the actuation device 180 corresponds to the "operation member" of the present invention.

In this embodiment, it is judged that the vehicle occupant is willing to actuate the actuation device 180 in case that the aforementioned determination processing section 144 determines that the palm or back of hand of the vehicle occupant exists in the predetermined operational area C, the ECU 170 outputs an actuation signal for actuating the actuation device 180. The control mode of this process is a mode in which the actuation device 180 is actuated by non-contact operation of the operation member 180a and corresponds to the "second operation mode" of the present invention. This embodiment accepts any arrangement capable of outputting an actuation signal to the actuation device 180 based on the process by the computing unit 140. That is, the ECU 170 may be arranged between the computing unit 140 and the actuation device 180 as shown in Fig. 1 and the computing unit 140 may directly output an actuation signal to the actuation device 180.

### First Process Example

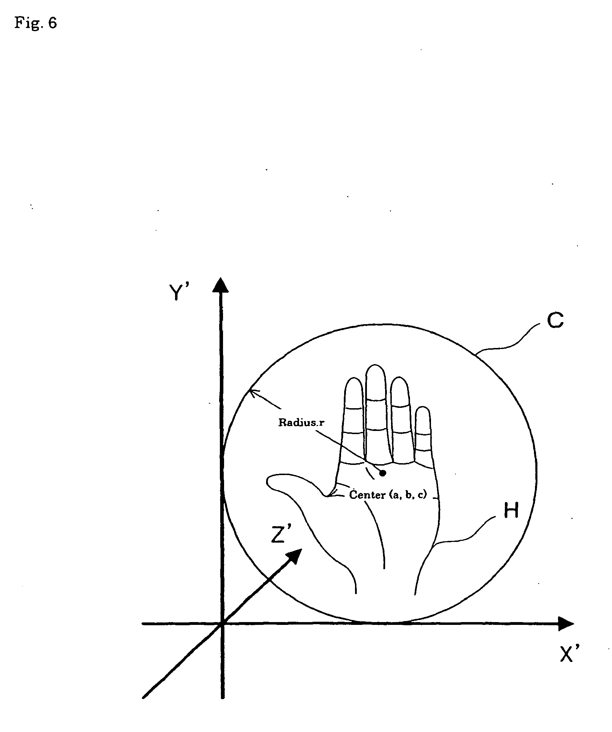

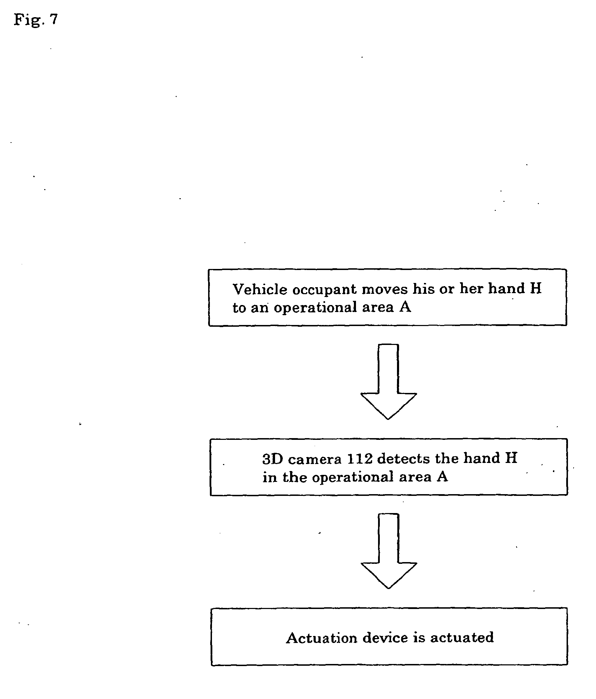

Hereinafter, the first process example to be conducted by the computing unit 140 of this embodiment will be described with reference to Fig. 6 and Fig. 7.

Fig. 6 schematically shows an aspect of detecting the existence of the palm or back of hand H of the vehicle occupant within the operational area C of a predetermined range about the operation member 180a. In this example shown in Fig. 6, the operational area C of this embodiment is defined as an inner space of a sphere of which radius is "r" and the center is (a, b, c) relative to the X'-axis, Y'-axis, and Z'-axis. In this case, the operational area C is an area defined by an expression (x·a)² + (y·b)² + (z-C)² ≤ r². The computing unit 140 determines that the object (detection subject) exists in the operational area C when the number of pixels "p" existing in the area defined by the expression is equal to or more than a certain value "m". Further, the computing unit 140 determined that the object existing in the operational area C is the palm or back of hand of the vehicle occupant when the number of pixels "p" is equal to or less than a certain value "n" (>m). That is, it is determined that the object having a size corresponding to the palm or back of hand of the vehicle occupant exists in the operational area C when a relation relative to the number of pixels "p" expressed by m ≤ p ≤ n is established. The certain values "m", "n" relating to the number of pixels "p" are previously stored in the storing unit 150. As examples of the certain values "m", "n", m=200, n=300 may be employed. The operational area which is set for detecting the existence of the palm or back of hand of the vehicle occupant may be defined as various forms such as a cube and a rectangular parallelepiped, instead of the sphere as the operational area C. The distance spaced from the operation member 180a as a factor of defining the operational area can be suitably set according to the size of the palm or back of hand supposed. The aforementioned operational area corresponds to the "operational area" of the present invention.

Fig. 7 shows a flow diagram where the actuation device 180 is actuated based on the detection of the palm or back of hand H of the vehicle occupant in the operational area C shown in Fig. 6. As shown in Fig. 7, as the vehicle occupant moves his or her hand H to the operational area C for actuating the actuation device, the palm or back of the hand H is detected by the 3D camera 112. When the computing unit 140 determines that the palm or back of hand H of the vehicle occupant exists in the operational area C, it is judged that the vehicle occupant is willing to actuate the actuation device 180 so as to start the control for actuating the actuation device 180. For example, when it is determined that the palm or back of hand of the vehicle occupant exists in the operational area of a switch for a courtesy light, the courtesy light is turned on even when the switch for the courtesy light is not directly operated or contacted. When it is determined that the palm or back of hand of the vehicle occupant exists in the operational area of a switch for an audio system, the audio system is actuated even when the switch for the audio system is not directly operated. As for the process after the actuation of the actuation device 180, an arrangement of automatically stopping the actuation device 180 after a lapse of certain time may be employed and an arrangement of stopping the actuation device 180 when the palm or back of hand H of the vehicle occupant is detected in the operational area C again after a lapse of certain time may be employed.

In this embodiment, the photographing means 110 may be a single photographing device (the 3D camera 112 or the like) capable of detecting three-dimensional images at one or more operational areas or may be composed of a plurality of photographing devices. The plural operational areas may be areas separate from each other or respective sections of a single operational area. For example, when controls for at least two actuation devices such as an air conditioner and an audio system are conducted by a single photographing device, the operation members of the actuation devices are positioned close to each other, a first section of the single operational area may be defined as the operational area for the actuation of the air conditioner and a second section of the single operational area may be defined as the operational area for the actuation of the audio system. That is, according to which section of the single operational area the palm or back of hand of the vehicle occupant exists in, it is specified which actuation device must be actuated.

### Second Process Example

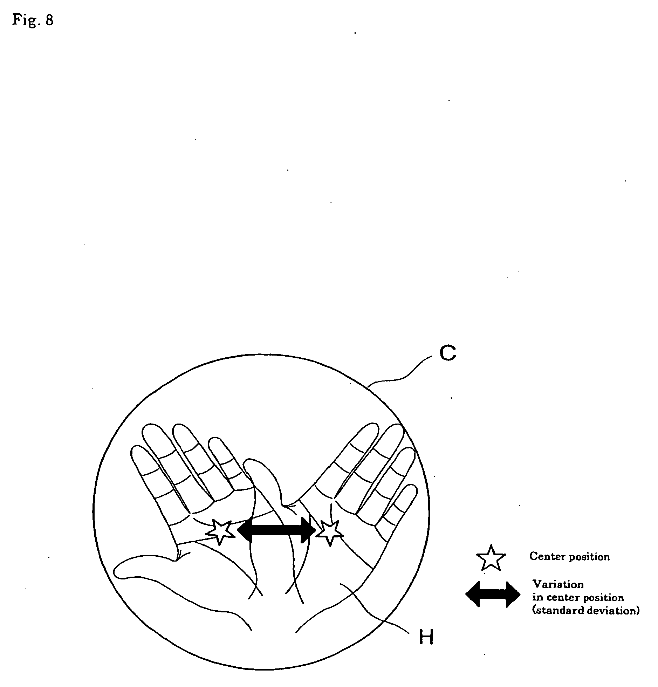

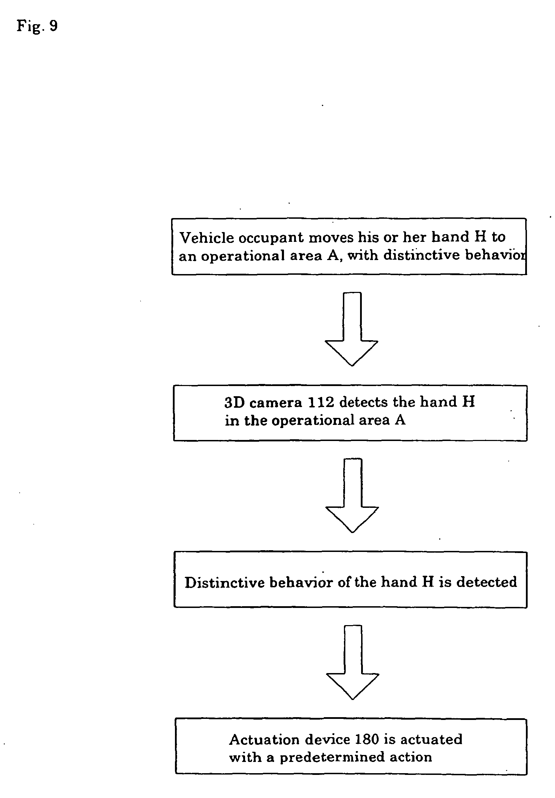

The second process example to be conducted by the computing unit 140 of this embodiment will be described with reference to Fig. 8 and Fig. 9.

Fig. 8 schematically shows an aspect of detecting the behavior of the palm or back of hand H of the vehicle occupant in the predetermined operational area C including the operation member 180a of this embodiment. In the example shown in Fig. 8, the behavior of the palm or back of hand H of the vehicle occupant is detected based on changes in the center position of pixels in the operational area C. Specifically, assuming the coordinate of the pixels in the operational area C as (Xk, Yk, Zk) and assuming the number of pixels as N, Σ is a sum of k = 1 through N and the center position of the pixels is obtained by an expression (E (Xk)/N, Σ (Yk)/N, Σ (Zk)/N). According to the standard deviation of the center position of the pixels within a certain period of time, the moving amount of the hand H in the operational area C is obtained. According to the thus obtained moving amount, the kind of behavior of the palm or back of hand H of the vehicle occupant is judged. The moving amount, moving speed, acceleration, or staying time of the hand H may be employed as well as the moving amount of the hand H within the operational area C.

Fig. 9 shows a flow diagram until the actuation device 180 is actuated based on the detection of the behavior of the palm or back of hand H of the vehicle occupant in the operational area C shown in Fig. 8. As shown in Fig. 9, as the vehicle occupant moves his or her hand H to the operational area C and performs specific behavior for actuating the actuation device, the palm or back of the hand H is detected by the 3D camera 112. When the computing unit 140 determines that the palm or back of hand H of the vehicle occupant exists in the operational area C and further detects the specific behavior of the palm or back of hand H, it is judged that the vehicle occupant is willing to actuate the actuation device 180 in a predetermined mode so as to start the control for actuating the actuation device 180 in the predetermined mode. For example, when vertical motion of the clenched fist or hand of the vehicle occupant is detected in the operational area of the switch for the audio system, a control for increasing the sound volume of the audio system is conducted even when the switch for the audio system is not directly operated or contacted. As for the process after the actuation of the actuation device 180, an arrangement of automatically stopping the actuation device 180 after a lapse of certain time may be employed and an arrangement of stopping the actuation device 180 when the palm or back of hand H of the vehicle occupant is detected in the operational area C again after a lapse of certain time may be employed.

### Third Process Example

In the third process example to be conducted by the computing unit 140 of this embodiment, the vehicle occupant gives a voice message of information for specifying the actuation device 180 corresponding to the operation area C before the vehicle occupant moves his or her hand H to the operational area C in addition to the first process example. In this case, a voice input unit 190 shown by a chain double-dashed line in Fig. 1 is added as a system component. The voice input unit 190 is typically composed of a microphone for voice input. The voice input unit 190 is a unit to which information about an intended operation member which will be operated by the vehicle occupant is inputted by the voice message and corresponds to the "voice input unit" of the present invention.

In this third process example, the vehicle occupant inputs, with his or her voice, information about the operation device 180, which will be actuated after this, to the voice input unit 190. Therefore, the operation member which will be operated by the vehicle occupant is specified. As the information about the operation device 180, a word indicating the operation device 180 itself or a sentence including the word is vocalized. After that, based on the information inputted in the voice input unit 190, the computing unit 140 conducts the control for actuating the actuation device 180 when the operation member corresponding to the operational area where the hand is detected is identical to the intended operation member which is previously specified. For example, when it is determined that the palm or back of hand of the vehicle occupant exists in the operational area of the switch for the audio system after the vehicle occupant gives a voice message about the audio system (vocalizes "audio" or "actuate the audio system"), the audio system is actuated even when the switch for the audio system is not directly operated.

### Fourth Process Example

In the fourth process example to be conducted by the computing unit 140 of this embodiment, the vehicle occupant gives a voice message for specifying the actuation device 180 corresponding to the operation area C before the vehicle occupant moves his or her hand H to the operational area C in addition to the second process example. In this case, a voice input unit 190 similar to that of the third process example is added as a system component.

In this fourth process example, the vehicle occupant inputs information about the operation device 180, which will be actuated after this, to the voice input unit 190 by the voice message. Therefore, the operation member which will be operated by the vehicle occupant is specified. After that, based on the information inputted in the voice input unit 190, the computing unit 140 conducts the control for actuating the actuation device 180 when the operation member corresponding to the operational area C where the hand is detected is identical to the previously specified intended operation member and conducts a control for changing the action of the actuation device 180 based on the behavior of the hand H. For example, when vertical motion of the clenched hand of the vehicle occupant is detected in the operational area of the switch for the audio system after the vehicle occupant gives a voice message about the audio system (vocalizes "audio" or "actuate the audio system"), a control for increasing the sound volume of the audio system is conducted even when the switch for the audio system is not directly operated or contacted.

As described above, according to the vehicular actuation system 100 of this embodiment or the vehicle to which the vehicular actuation system 100 is installed, there is at least the first operation mode in which the operation member 180a is directly operated by the vehicle occupant to actuate the actuation device 180 and the second operation mode in which the actuation device 180 is actuated even when the operational member 180 is not directly operated, that is, by non-contact operation of the operational member 180. Therefore, the vehicle occupant can select the first operation mode or the second operation mode for actuating the actuation device 180 before and after driving and during stoppage of the vehicle and can select the second operation mode for actuating the actuation device during driving. Particular, in case that the vehicle occupant sitting in the normal position directly operates the operation member 180a having a limited size during driving, a certain period of time is required to look around the operation member 180a and/or the vehicle occupant may be out of the normal position so that there is a concern that the vehicle occupant's attention is diminished. However, if the vehicle occupant selects the second operation mode only requiring the movement of the hand into the operational area around the operation member 180a, the allowable range for the hand for actuating the actuation device 180 is increased, thereby allowing easy operation for actuating the actuation device 180 and thus preventing the vehicle occupant's attention from being diminished.

By the respective processes based on the three-dimensional images taken by the 3D camera 112, the information in the intended operational area can be precisely detected. That is, in case of using three-dimensional images, it ensures high degree of precision in detection as compared to the case of using two-dimensional images because information can be extracted according to distances even when there is a small difference in color between the background and the vehicle occupant or a small difference in color between the skin and the clothes.

According to an embodiment, like the second process example as mentioned above, the vehicle occupant can suitably select behavior of the hand corresponding to a desired action of the actuation device. This enables fine control for the actuation device without directly operating the operation member manually.

Further, according to an embodiment, like the third process example and the fourth process example as mentioned above, information about the intended operation member which will be operated is inputted by a voice message and is announced beforehand. This specifies the actuation device intended by the vehicle occupant as the subject to be actuated, thereby preventing the malfunction of the actuation device.

### Another embodiment

The present invention is not limited to the aforementioned embodiments and various applications and modifications may be made. For example, the following embodiment based on the aforementioned embodiment may be carried out.

Though the aforementioned embodiments have been described with regard to the arrangement of the vehicular actuation system 100 to be installed in an automobile, the present invention can be adopted to vehicular actuation systems to be installed in various vehicles such as an automobile, an airplane, a boat, a bus, and a train.

## Claims

1. A vehicular actuation system which is installed in a vehicle comprising:
an actuation device (180) to be actuated when an operation member (180a) for the actuation device (180) is operated by a vehicle occupant;
a detecting unit (110) for detecting a three-dimensional image in an operational area (C) of a predetermined range about said operation member; and
a control unit (120) which determines based on the three-dimensional image detected by said detecting unit (110) whether or not a palm or back of hand (H) of the vehicle occupant exists in said operational area (C) and conducts a control to actuate said actuation device (180) when it is determined that the palm or back of hand (H) of the vehicle occupant exists in said operational area (C), wherein
said vehicular actuation system (100) has a first operation mode in which said operation member (180a) is directly operated by the palm or back of hand (H) of the vehicle occupant to actuate said actuation device (180) and a second operation mode in which said actuation device (180) is actuated by non-contact operation of said operation member (180a) according to the control of said control unit (120), **characterized in that** the vehicular actuation system further comprises a voice input unit (190) to which the vehicle occupant inputs, with his or her voice, information about an intended operation member (180a) which will be operated, wherein
in said second operation mode, when said intended operation member (180a) is specified based on the information inputted to said voice input unit (190) and when it is determined, based on the three-dimensional image detected by said detecting unit (110), that the palm or back of hand (H) of the vehicle occupant exists in said operational area (C), said control unit (120) conducts a control to actuate said actuation device (180) under the condition where said operation member (180a) corresponding to the operational area (C) where the palm or back of hand (H) is detected is identical to the intended operation member (180a) which is previously specified.

2. A vehicular actuation system as claimed in claim 1, wherein
in said second operation mode, said control unit (120) determines a behavior of the palm or back of hand (H) of the vehicle occupant when it is determined, based on the three-dimensional image detected by said detecting unit (110), that the palm or back of hand (H) of the vehicle occupant exists in said operational area (C), and conducts a control to change the action of said actuation device (180) according to the behavior of the palm or back of hand (H) for actuating said actuation device (180).

3. A vehicle comprising:
an engine/running system;
an electrical system;
a vehicle control device for controlling the actuation of said engine/running system and said electrical system; and
a vehicular actuation system (100) as claimed in claim 1 or claim 2.

## Patentansprüche

1. Fahrzeugbediensystem, welches in einem Fahrzeug installiert ist, umfassend:
eine Bedienvorrichtung (180), welche anzusteuern ist, wenn ein Betätigungselement (180a) für die Bedienvorrichtung (180) von einem Fahrzeuginsassen betätigt wird;
eine Erfassungseinheit (110) zum Erfassen eines dreidimensionalen Bildes in einem Betätigungsbereich (C) eines vorbestimmten Bereichs um das Betätigungselement; und
eine Steuereinheit (120), welche auf der Grundlage des von der Erfassungseinheit (110) erfassten dreidimensionalen Bildes bestimmt, ob sich eine Handfläche oder eine Rückseite einer Hand (H) des Fahrzeuginsassen in dem Betätigungsbereich (C) befindet oder nicht, und eine Steuerung durchführt, um die Bedienvorrichtung (180) anzusteuern, wenn bestimmt wurde, dass sich die Handfläche oder die Rückseite der Hand (H) des Fahrzeuginsassen in dem Betätigungsbereich (C) befindet, wobei
das Fahrzeugsbediensystem (100) eine erste Betriebsart, in welcher das Betätigungselement (180a) direkt von der Handfläche oder der Rückseite der Hand (H) des Fahrzeuginsassen betätigt wird, um die Bedienvorrichtung (180) anzusteuern, und eine zweite Betriebsart, in welcher die Bedienvorrichtung (180) durch eine Nicht-Kontaktbetätigung des Betätigungselements (180a) gemäß der Steuerung der Steuereinheit (120) angesteuert wird, aufweist,
**dadurch gekennzeichnet, dass**
das Fahrzeugbediensystem ferner eine Spracheingabeeinheit (190) umfasst, in welche der Fahrzeuginsasse mit seiner oder ihrer Stimme eine Information über ein bestimmungsgemäßes Betätigungselement (180a) eingibt, welches betätigt werden wird, wobei in der zweiten Betriebsart, wenn das bestimmungsgemäße Betätigungselement (180a) auf der Grundlage der in die Spracheingabeeinheit (190) eingegebenen Information spezifiziert ist, und wenn auf der Grundlage des von der Erfassungseinheit (110) erfassten dreidimensionalen Bildes bestimmt ist, dass sich die Handfläche oder die Rückseite der Hand (H) des Fahrzeuginsassen in dem Betätigungsbereich (C) befindet, die Steuereinheit (120) eine Steuerung durchführt, um die Bedienvorrichtung (180) unter der Bedingung anzusteuern, dass das Betätigungselement (180a), welches dem Betätigungsbereich (C) entspricht, wo die Handfläche oder die Rückseite der Hand (H) erfasst wird, identisch zu dem bestimmungsgemäßen Betätigungselement (180a) ist, welches zuvor spezifiziert wurde.

2. Fahrzeugbediensystem nach Anspruch 1, wobei in der zweiten Betriebsart die Steuereinheit (120) ein Verhalten der Handfläche oder der Rückseite der Hand (H) des Fahrzeuginsassen bestimmt, wenn auf der Grundlage des von der Erfassungseinheit (110) erfassten dreidimensionalen Bildes bestimmt wird, dass sich die Handfläche oder die Rückseite der Hand (H) des Fahrzeuginsassen in den Betätigungsbereich (C) befindet, und eine Steuerung durchführt, um die Wirkungsweise der Bedienvorrichtung (180) gemäß dem Verhalten der Handfläche oder der Rückseite der Hand (H) zum Steuern der Bedienvorrichtung (180) zu ändern.

3. Fahrzeug umfassend:
einen Motor / ein Fahrsystem;
ein elektrischen System;
eine Fahrzeugsteuervorrichtung zum Steuern der Bedienung des Motors / des Fahrsystems und des elektrischen Systems; und ein Fahrzeugbediensystem (100) nach Anspruch 1 oder Anspruch 2.

## Revendications

1. Système de commande des fonctions dans un véhicule, installé dans un véhicule comprenant :
un dispositif d'actionnement (180), devant être actionné lorsqu'un organe d'actionnement (180a), pour le dispositif d'actionnement (180), est actionné par un passager du véhicule ;
une unité de détection (110), pour détecter une image tridimensionnelle dans une zone opérationnelle (C) dans une zone prédéterminée autour dudit organe d'actionnement ; et
une unité de commande (120) qui, d'après l'image tridimensionnelle détectée par ladite unité de détection (110), détermine si une paume ou le dos de la main (H) du passager de véhicule se trouve ou non dans ladite zone opérationnelle (C) et procède à une commande pour actionner ledit dispositif d'actionnement (180) lorsqu'il est déterminé que la paume ou le dos de la main (H) du passager du véhicule se trouve dans ladite zone opérationnelle (C), dans lequel
ledit système de commande des fonctions dans un véhicule (100) présente un premier mode de fonctionnement, dans lequel ledit organe d'actionnement (180a) est directement actionné par la paume ou le dos de la main (H) du passager du véhicule, de manière à actionner ledit dispositif d'actionnement (180), et un deuxième mode de fonctionnement, dans lequel ledit dispositif d'actionnement (180) est actionné par un actionnement sans contact dudit organe d'actionnement (180a), selon la commande de ladite unité de commande (120),
**caractérisé en ce que**
le système de commande des fonctions dans un véhicule comprend en outre une unité d'entrée vocale (190), à laquelle le passager ou la passagère du véhicule entre, avec sa voix, une information concernant un organe d'actionnement (180a) prévu qui va être actionné, dans lequel,
dans ledit deuxième mode de fonctionnement, lorsque ledit organe d'actionnement (180a) prévu est spécifié d'après l'information introduite à ladite unité d'entrée vocale (190), et lorsqu'il est déterminé, d'après l'image tridimensionnelle détectée par ladite unité de détection (110), que la paume ou le dos de la main (H) du passager du véhicule se trouve dans ladite zone opérationnelle (C), ladite unité de commande (120) procède à une commande pour actionner ledit dispositif d'actionnement (180) dans les conditions dans lesquelles ledit organe d'actionnement (180a), correspondant à la zone opérationnelle (C) à laquelle la paume ou le dos de la main (H) est détecté(e), est identique à l'organe d'actionnement (180a) prévu, antérieurement spécifié.

2. Système de commande des fonctions dans un véhicule selon la revendication 1, dans lequel,
dans ledit deuxième mode de fonctionnement, ladite unité de commande (120) détermine un comportement de la paume ou du dos de la main (H) du passager du véhicule, lorsqu'il et déterminé, d'après l'image tridimensionnelle détectée par ladite unité de détection (110), que la paume ou le dos de la main (H) du passager du véhicule se trouve dans ladite zone opérationnelle (C), et procède à une commande pour modifier l'action dudit dispositif d'actionnement (180) selon le comportement de la paume ou du dos de la main (H), pour actionner ledit dispositif d'actionnement (180).

3. Véhicule, comprenant :
un système moteur/de conduite ;
un système électrique ;
un dispositif de commande de véhicule, pour commander l'actionnement dudit système moteur/de conduite et dudit système électrique ; et
un système de commande des fonctions dans un véhicule (100) selon la revendication 1 ou la revendication 2.
